# EUROPÄISCHE PATENTSCHRIFT

(11) **EP 3 169 570 B1**
(45) Veröffentlichungstag und Bekanntmachung des Hinweises auf die Patenterteilung: **02.05.2018**
(21) Anmeldenummer: 15741971.4
(22) Anmeldetag: 16.07.2015
(51) Int. Cl.: B60W 50/08, B60W 50/10, B60K 28/02, B60K 28/10, G05D 1/00

(54) **VERFAHREN ZUM ÜBERWACHEN EINES AUTOMATISIERTEN FAHRENS**
METHOD FOR MONITORING AUTOMATED DRIVING
PROCÉDÉ DE SURVEILLANCE D'UNE CONDUITE AUTOMATISÉE

(30) Priorität: 17.07.2014 DE 102014213959
(43) Veröffentlichungstag der Anmeldung: 24.05.2017
(73) Patentinhaber: Continental Automotive GmbH, 30165 Hannover (DE)
(72) Erfinder: SCHMID, Bernhard, 61169 Friedberg (DE)
(86) Internationale Anmeldenummer: PCT/EP2015/066347
(87) Internationale Veröffentlichungsnummer: WO 2016/009012

(56) Entgegenhaltungen:
- EP-A1- 2 314 490
- DE-A1- 19 648 943
- DE-A1- 19 743 024
- JP-A- H03 282 713

## Beschreibung

Die Erfindung betrifft ein Verfahren zum Überwachen eines automatisierten Fahrens, insbesondere das Überwachen der Fähigkeit eines Fahrassistenzsystems, ein Fahrzeug in einem automatisierten Fahrbetrieb zu steuern.

Die Einführung von teil- bzw. hochautomatisierten Fahrfunktionen bedingt laut Definition eine Übernahme des Fahrens durch den Fahrer. Die Übernahme der Fahrzeugkontrolle über das Fahrzeug durch den Fahrer hat beispielsweise dann zu erfolgen, wenn ein Fahrassistenzsystem, das das Fahrzeug im automatisierten Fahrbetrieb steuern kann, eine Fahrsituation erkennt, welche das Fahrassistenzsystem nicht meistern kann, oder wenn die automatisierte Fahrfunktion durch technische Probleme des Fahrassistenzsystems degradiert oder ganz ausfällt. Im Falle einer geforderten Übernahme des Fahrzeugs durch den Fahrer muss von dem Fahrassistenzsystem sichergestellt werden, dass die Übernahme durch den Fahrer tatsächlich erfolgt ist.

Bei einem wenig komplexen Fahrhilfesystem zur Unterstützung eines Fahrers, bei dem der Fahrer ebenfalls in kritischen Situationen eigenständig das Fahren übernehmen muss, ist das Feststellen von einfachen Indizes, beispielsweise einer Bewegung des Lenkrades, einer Betätigung der Pedale zum Bremsen oder Beschleunigen, bereits ausreichend, um zu erkennen, dass der Fahrer die Kontrolle über das Fahrzeug wieder übernommen hat, da der Fahrer zwingend immer mit im Fahrgeschehen involviert sein muss. Beim teil- beziehungsweise hochautomatisierten Fahren wird es jedoch dem Fahrer erlaubt sein, sich während des automatisierten Fahrens aus dem Fahrgeschehen auszuklinken und einer anderen Beschäftigung nachzugehen.

Beim teil- oder hochautomatisierten Fahren sind daher die oben genannten einfachen Indizes zum Feststellen der tatsächlichen Übernahme der Fahrzeugsteuerung durch den Fahrer nicht mehr ausreichend. Es kann nicht ausgeschlossen werden, dass Bewegungen des Lenkrads, des Bremspedals oder des Gaspedals nicht willentlich vom Fahrer ausgeführt worden sind, sondern durch eine zufällig ungewollte Berührung des Lenkrades oder der Pedale durch den Fahrer erfolgt sind, auch wenn der Fahrer noch nicht in der Lage ist, die Steuerung über das Fahrzeug wieder zu übernehmen. Ein Fahrer, der beispielsweise dabei ist, sich mit einem Fahrgast im Fonds des Fahrzeugs zu unterhalten, kann beim Umdrehen zu dem Fahrgast unbeabsichtigt einen Lenkausschlag verursachen, der von dem Fahrassistenzsystem jedoch nicht als Übernahme des Fahrzeugs durch den Fahrer missinterpretiert werden darf.

Aus EP 2 314 490 A1 ist ein Verfahren zur Steuerung eines Betriebs eines vollautomatischen, zur unabhängigen Fahrzeugführung ausgebildeten Fahrerassistenzsystems eines Kraftfahrzeugs bekannt, bei welchem bei Eintritt einer Übernahmebedingung eine Fahrerübernahmeaufforderung ausgegeben wird.

Die Aufgabe der vorliegenden Erfindung ist es, ein Verfahren zum Überwachen eines automatisierten Fahrens anzugeben, bei dem eine Erkennung der Übernahme der Fahrzeugsteuerung durch den Fahrer beim automatisierten Fahren sichergestellt ist. Eine weitere Aufgabe der vorliegenden Erfindung ist es, ein Fahrassistenzsystem zum automatisierten Fahren mit Überwachen des automatisierten Fahrens anzugeben, das das Erkennen der Kontrolle über das Fahrzeug durch einen Fahrer beim automatisierten Fahren sicherstellt. Eine weitere Aufgabe der vorliegenden Erfindung ist es, ein Fahrzeug mit einem derartigen Fahrassistenzsystem anzugeben.

Die Aufgabe in Bezug auf das Verfahren zum Überwachen eines automatisierten Fahrens wird mit dem im Patentanspruch 1 angegebenen Verfahren gelöst.

Gemäß einer möglichen Ausführungsform des Verfahrens zum Überwachen eines automatisierten Fahrens wird zur Ausführung des Verfahrens ein Fahrzeug bereitgestellt, das mittels eines Fahrassistenzsystems durch automatisierte Steuerungsvorgänge in einem automatisierten Fahrbetrieb ohne einen Fahrer steuerbar ist. Des Weiteren ist das bereitgestellte Fahrzeug mittels des Fahrassistenzsystems in einem automatisierten Notlaufbetrieb, in dem der automatisierte Fahrbetrieb beendet und das Fahrzeug angehalten wird, steuerbar. Darüber hinaus ist das bereitgestellte Fahrzeug in einem manuellen Fahrbetrieb durch manuelle Steuerungsvorgänge des Fahrers steuerbar. Das bereitgestellte Fahrzeug zeichnet sich des Weiteren dadurch aus, dass für einen Wechsel zwischen dem automatisierten Fahrbetrieb und dem manuellen Fahrbetrieb eine Zeit zur Übernahme des Fahrzeugs durch den Fahrer erforderlich ist.

Gemäß einer Ausführungsform des Verfahrens wird zunächst eine zukünftig eintretende Fahrsituation erfasst. Anschließend wird festgestellt, ob das Fahrassistenzsystem in der Lage ist, in der zukünftigen Fahrsituation das Fahrzeug im automatisierten Fahrbetrieb zu steuern. Eine Zeit, die vom Ermitteln der zukünftigen Fahrsituation bis zum Eintreten der zukünftigen Fahrsituation verstreicht, wird mit der Zeit zur Übernahme des Fahrzeugs verglichen, wenn zuvor festgestellt worden ist, dass das Fahrassistenzsystem nicht in der Lage ist, das Fahrzeug in der zukünftigen Fahrsituation im automatisierten Fahrbetrieb zu steuern.

Anschließend wird überprüft, ob die von Sensoren des Fahrzeugs erfassten manuellen Steuerungsvorgänge in der aktuellen Fahrsituation mit den von dem Fahrassistenzsystem ermittelten automatisierten Steuerungsvorgängen für die aktuelle Fahrsituation übereinstimmen, wenn zuvor festgestellt worden ist, dass die Zeit bis zum Eintreten der zukünftigen Fahrsituation größer als die Zeit zur Übernahme des Fahrzeugs durch den Fahrer ist.

Der automatisierte Fahrbetrieb wird deaktiviert und das Fahrzeug wird im manuellen Fahrbetrieb gesteuert, wenn festgestellt worden ist, dass die manuellen Steuerungsvorgänge in der aktuellen Fahrsituation mit den von dem Fahrassistenzsystem ermittelten automatisierten Steuerungsvorgängen für die aktuelle Fahrsituation übereinstimmen. Wenn hingegen festgestellt wird, dass die Zeit bis zum Eintreten der zukünftigen Fahrsituation kleiner oder gleich der Zeit zur Übernahme des Fahrzeugs ist, wird der automatisierte Notlaufbetrieb des Fahrzeugs aktiviert.

Beim automatisierten Fahren wird das Lenkrad von der Lenkung, das Bremspedal von der Bremse und das Gaspedal von der Motorsteuerung entkoppelt. Das vom Fahrer induzierte Lenken, Bremsen und Beschleunigen kann durch geeignete Sensoren, beispielsweise Lenkwinkel- und Pedalwegsensoren, gemessen werden. Ein Wechsel vom automatisierten Fahrbetrieb in den manuellen Fahrbetrieb wird von dem Fahrassistenzsystem einem Fahrer dann angeboten, wenn von dem Fahrassistenzsystem festgestellt worden ist, dass das Fahrassistenzsystem nicht in der Lage ist, das Fahrzeug in einer zukünftig eintretenden Fahrsituation weiterhin im automatisierten Fahrbetrieb zu steuern und wenn die Zeit bis zum Eintreten der kritischen Fahrsituation größer ist als die notwendige Zeit zur Übernahme des Fahrzeugs durch den Fahrer.

Um sicherzustellen, dass der Fahrer die Kontrolle über das Fahrzeug auch tatsächlich vollständig übernommen hat, kann während der Übergabezeit das Lenk-, Brems- und Beschleunigungsverhalten des Fahrzeugs über die Fahrzeugsensoren erfasst und mit den berechneten Sollwerten, die von dem Fahrassistenzsystem aus der Automatisierungsfunktion bereitgestellt werden, verglichen werden. Wenn die manuell ausgeführten Steuerungsvorgänge mit den Sollwerten, die von dem Fahrassistenzsystem für das automatisierte Fahren berechnet worden sind, übereinstimmen, so ist dadurch die Übernahmebereitschaft durch den Fahrer bestätigt und die Sensorsignale können direkt auf die Ansteuerung der jeweiligen Aktoren für Lenkung, Bremse und Motor übertragen werden. Der automatisierte Fahrbetrieb kann abgeschaltet werden.

Wenn während der vorgegebenen Übergabezeit eine Bestätigung der Übernahme des Fahrzeugs durch den Fahrer nicht festgestellt werden kann, da die erfassten manuellen Steuerungsvorgänge nicht mit den ermittelten notwendigen automatisierten Steuerungsvorgängen übereinstimmen, so kann der automatisierte Fahrbetrieb nicht ohne Weiteres abgeschaltet werden. Stattdessen schaltet das Fahrassistenzsystem die Automatisierungsfunktion in einen Notlaufbetrieb. Im Notlaufbetrieb kann das Fahrassistenzsystem das Fahrzeug je nach Verkehrslage entweder bis zum Stillstand verlangsamen oder das Fahrzeug wird weiterhin im automatisierten Fahrbetrieb bis auf den nächstmöglichen sicheren Platz gesteuert und dort angehalten.

Solange die Automatisierungsfunktion des Fahrassistenzsystems noch funktionsfähig ist, kann auch während des Notlaufbetriebs die Interpretation der zukünftig eintretenden Fahrsituation weiterhin durchgeführt und das Fahrverhalten des Fahrers während des Notlaufbetrieb durch Vergleich der automatisierten Steuerungsvorgänge mit potentiellen manuellen Steuerungsvorgänge des Fahrers weiter überwacht werden. Wenn von dem Fahrassistenzsystem festgestellt wird, dass eine vorausliegende Fahrsituation nun doch von dem Fahrassistenzsystem gemeistert werden kann, so kann der automatisierte Fahrbetrieb fortgeführt werden.

Wenn während des Notlaufbetriebs festgestellt wird, dass die manuellen Steuerungsvorgänge mit den berechneten Sollwerten der automatisierten Steuerungsvorgänge übereinstimmen, kann der Notlaufbetrieb abgebrochen und in den manuellen Fahrbetrieb gewechselt werden.

Gemäß einer weiteren Ausführungsform des Verfahrens kann überprüft werden, ob bei dem Fahrassistenzsystem ein Defekt vorliegt und somit die Automatisierungsfunktion, zum Beispiel durch einen Hardware-Defekt des Systems, nicht mehr funktionsfähig ist. In diesem Fall kann das Fahrzeug unmittelbar in den automatisierten Notlaufbetrieb gesteuert werden. Erst wenn der Fahrer die Übernahme des Fahrzeugs durch Eingabe eines externen Steuerbefehls, beispielsweise durch das Drücken einer Taste oder durch Spracheingabe, bestätigt, wird der Notlaufbetrieb beendet und das Fahrzeug im manuellen Fahrbetrieb gesteuert.

Die Erfindung wird im Folgenden anhand von Figuren, die Ausführungsbeispiele der vorliegenden Erfindung zeigen, näher erläutert. Es zeigen:
- Figur 1: ein Fahrzeug mit einem Fahrassistenzsystem zum automatisierten Fahren mit Überwachen des automatisierten Fahrens,
- Figur 2: eine Ausführungsform eines Verfahrens zum Überwachen eines automatisierten Fahrens.

Beim teil- beziehungsweise hochautomatisierten Fahren wird es erforderlich sein, dass ein Fahrer die Steuerung über ein Fahrzeug wieder übernimmt, wenn eine kritische Fahrsituation auftritt, die von einem Fahrassistenzsystem zum automatisierten Fahren nicht mehr bewältigt werden kann. In einer derartigen kritischen Situation kann jedoch der Fahrer oftmals nicht richtig entscheiden und aktiv durch das Drücken eines Knopfes oder durch eine Spracheingabe seine Fahrbereitschaft für die Übernahme des Fahrzeugs bestätigen. Es können auch Fälle auftreten, in denen ein Fahrer zwar die Übernahme der Kontrolle des Fahrzeugs bestätigt hat, seine von ihm ausgeführten manuellen Steuerungsvorgänge jedoch aufgrund von Überforderung durch die plötzliche Übernahmeaufforderung zu einem unkontrollierten Fahrverhalten führen.

Mittels des im Folgenden angegebenen Verfahrens zum Überwachen eines automatisierten Fahrens beziehungsweise mittels eines Fahrassistenzsystems zum automatisierten Fahren mit einer Funktion zum Überwachen des automatisierten Fahrens ist eine zuverlässige Erkennung der Fahrbereitschaft des Fahrers im Hintergrund, während ein Fahrzeug weiterhin automatisiert gesteuert wird, sichergestellt. Nach Übernahme des Fahrzeugs durch den Fahrer erhält der Fahrer letztendlich nur noch die Meldung, dass das Fahrassistenzsystem den automatisierten Fahrbetrieb abgeschaltet hat.

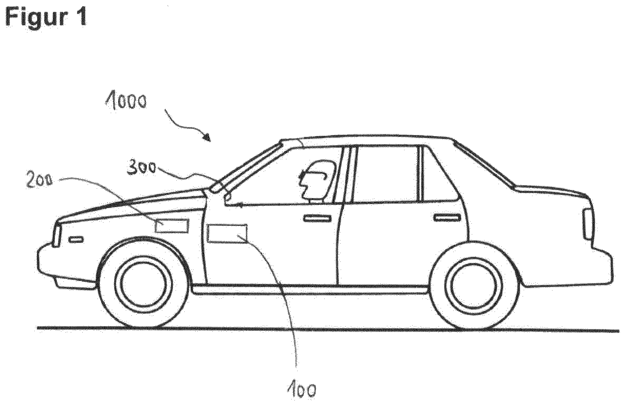

Figur 1 zeigt ein Fahrzeug 1000 mit einem Fahrassistenzsystem 100 zum automatisierten Fahren. Das Fahrzeug verfügt über Sensoren 200, mit denen sich manuelle Steuerungsvorgänge erfassen lassen. Die Sensoren 200 sind beispielsweise Lenkwinkel- und Pedalwegsensoren, die Bewegungen des Lenkrads, des Bremspedals oder des Gaspedals erfassen können. Das Fahrassistenzsystem 100 ist dazu ausgebildet, das Fahrzeug durch automatisierte Steuerungsvorgänge in einem automatisierten Fahrbetrieb ohne einen Fahrer zu steuern. Des Weiteren kann das Fahrassistenzsystem 100 das Fahrzeug auch in einem automatisierten Notlaufbetrieb steuern. Beim Steuern des Fahrzeugs 1000 im automatisierten Notlaufbetrieb wird der automatisierte Fahrbetrieb zunächst fortgesetzt, jedoch möglichst bald beendet und das Fahrzeug angehalten. Des Weiteren ist das Fahrzeug 1000 in einem manuellen Fahrbetrieb durch manuelle Steuerungsvorgänge des Fahrers steuerbar.

Gemäß dem Verfahren zum Überwachen des automatisierten Fahrens wird zunächst eine vorausliegende Fahrsituation, in der sich das Fahrzeug in Kürze befinden wird, das heißt eine zukünftig eintretende Fahrsituation, erfasst. Dazu kann beispielsweise ein Kamerasystem verwendet werden, das ein vorausliegendes Fahrgeschehen beziehungsweise eine vor dem Fahrzeug liegende Verkehrssituation aufnimmt, die zum Erfassen der in naher Zukunft eintretenden Fahrsituation von dem Fahrassistenzsystem 100 ausgewertet wird. Anhand der erfassten Fahrsituation kann das Fahrassistenzsystem 100 feststellen, ob es dazu in der Lage ist, in der zukünftig eintretenden Fahrsituation das Fahrzeug 1000 im automatisierten Fahrbetrieb weiter zu steuern.

Wenn von dem Fahrassistenzsystem 100 festgestellt wird, dass das Fahrassistenzsystem nicht in der Lage ist, das Fahrzeug 1000 in der vorausliegenden Fahrsituation weiterhin sicher im automatisierten Fahrbetrieb zu steuern, wird eine Zeit T_{S}, die eine Zeitspanne zwischen dem Erfassen der vorausliegenden Fahrsituation bis zum tatsächlichen Eintreten der vorausliegenden Fahrsituation angibt, mit einer Zeit T_{U}, die zur Übernahme des Fahrzeugs durch den Fahrer notwendig ist, verglichen. Wenn bei diesem Vergleich von dem Fahrassistenzsystem 100 festgestellt wird, dass die Zeit T_{S} bis zum Eintreten der zukünftigen Fahrsituation größer als die Zeit T_{U} zur Übernahme des Fahrzeugs ist, wird von dem Fahrassistenzsystem 100 überprüft, ob die von den Sensoren 200 des Fahrzeugs 1000 erfassten manuellen Steuerungsvorgänge in der aktuellen Fahrsituation mit den von dem Fahrassistenzsystem 100 ermittelten automatisierten Steuerungsvorgängen für die aktuelle Fahrsituation übereinstimmen.

Wenn sich dabei herausstellt, dass die manuellen Steuerungsvorgänge des Fahrers in der aktuellen Fahrsituation den von dem Fahrassistenzsystem 100 vorausberechneten automatisierten Steuerungsvorgängen für die aktuelle Fahrsituation entsprechen, wird der automatisierte Fahrbetrieb des Fahrassistenzsystems deaktiviert und das Fahrzeug 1000 im manuellen Fahrbetrieb betrieben. Der Fahrer kann nun aktiv die Kontrolle über das Fahrzeug übernehmen. Wenn bei dem Vergleich der Zeit T_{S} bis zum Eintreten der vorausliegenden Fahrsituation mit der für die Übernahme des Fahrzeugs durch den Fahrer notwendigen Zeit T_{U} von dem Fahrassistenzsystem festgestellt wird, dass die Zeit T_{S} kleiner oder gleich der Zeit T_{U} ist, wird der automatisierte Notlaufbetrieb des Fahrzeugs 1000 aktiviert.

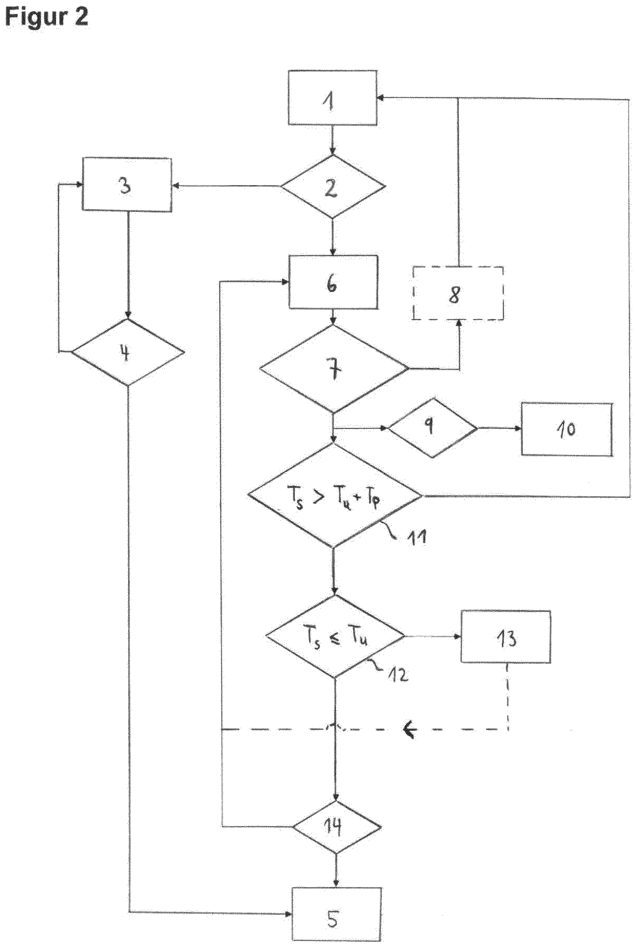

Im Folgenden wird anhand von Figur 2 ein Ausführungsbeispiel des Verfahrens zum Überwachen des automatisierten Fahrens beschrieben. In einem Ausgangszustand 1 wird das Fahrzeug 1000 zunächst von dem Fahrassistenzsystem 100 im automatisierten Fahrbetrieb betrieben. In einem nachfolgenden Schritt 2 wird von dem Fahrassistenzsystem 100 überprüft, ob die Automatisierungsfunktion des Fahrassistenzsystems, die das automatisierte Fahren ermöglicht, derart defekt ist, dass der automatisierte Fahrbetrieb des Fahrzeugs 1000 mittels des Fahrassistenzsystems 100 nicht mehr gewährleistet ist. Wenn ein Defekt des Fahrassistenzsystems 100 festgestellt wird, wird in einem Verfahrensschritt 3 der automatisierte Notlaufbetrieb des Fahrzeugs aktiviert. Das Fahrzeug wird im automatisierten Notlaufbetrieb noch für kurze Zeit automatisiert weitergesteuert und bei der nächstmöglichen Gelegenheit, beispielsweise auf einem Parkplatz, angehalten.

Gemäß einer möglichen Ausführungsform ist das Fahrassistenzsystem 100 mit einer Eingabeeinrichtung 300 zur externen Eingabe eines Steuerbefehls zum Wechseln in den manuellen Fahrbetrieb gekoppelt. Die Eingabeeinrichtung 300 kann beispielsweise eine Taste sein, so dass durch einen Tastendruck der Steuerbefehl zum Wechsel in den manuellen Fahrbetrieb eingegeben werden kann. Des Weiteren kann die Eingabeeinrichtung 300 ein Mikrofon sein, so dass das Fahrassistenzsystem den Steuerbefehl zum Wechsel in den manuellen Fahrbetrieb durch Spracheingabe erhält.

Während des Fahrens im automatisierten Notlaufbetrieb des Verfahrensschritts 3 wird von dem Fahrassistenzsystem 100 in einem Verfahrensschritt 4 überprüft, ob die Eingabe des Steuerbefehls zum Wechseln in den manuellen Fahrbetrieb durch den Fahrer erfolgt ist. Wenn das Fahrassistenzsystem 100 die Eingabe des Steuerbefehls zum Wechseln in den manuellen Fahrbetrieb feststellt, wird der automatisierte Notlaufbetrieb des Fahrzeugs 1000 deaktiviert und das Fahrzeug in einem Verfahrensschritt 5 im manuellen Fahrbetrieb weiterbetrieben. Entsprechend wird im Verfahrensschritt 5 der automatisierte Notlaufbetrieb deaktiviert.

Wenn im Verfahrensschritt 2 festgestellt wird, dass die Automatisierungsfunktion zum automatisierten Fahren voll funktionstüchtig ist, erfolgt in einem Verfahrensschritt 6 eine Interpretation der vorausliegenden Fahrsituation durch das Fahrassistenzsystem. Dabei wird eine zukünftig eintretende Fahr- beziehungsweise Verkehrssituation erfasst. In einem nachfolgenden Verfahrensschritt 7 wird von dem Fahrassistenzsystem 100 festgestellt, ob das Fahrassistenzsystem in der Lage ist, in der erfassten zukünftig eintreten Fahrsituation das Fahrzeug 1000 weiter im automatisierten Fahrbetrieb zu steuern. Wenn festgestellt wird, dass die vorausliegende Fahrsituation weiterhin automatisiert abgehandelt werden kann, wird optional in einem Verfahrensschritt 8 ein zuvor eventuell eingestellter automatisierter Notlaufbetrieb beendet beziehungsweise es wird lediglich das automatisierte Fahren des Verfahrensschritts 1 weiterhin fortgesetzt, falls das Fahrzeug im automatisierten Fahrbetrieb betrieben wird.

Wenn im Verfahrensschritt 7 festgestellt wird, dass das Fahrassistenzsystem 100 nicht in der Lage ist, das Fahrzeug 1000 in der zukünftigen Fahrsituation im automatisierten Fahrbetrieb zu steuern, wird in einem Verfahrensschritt 9 überprüft, ob der automatisierte Notlaufbetrieb bereits aktiviert ist. Wenn der automatisierte Notlaufbetrieb bereits aktiviert ist, wird dieser Zustand weiter beibehalten. Ansonsten erfolgt in einem Verfahrensschritt 10 ein Vorkonditionieren des automatisierten Notlaufbetriebs, was einem Einschalten eines Standby-Zustands des aktivierten Notlaufbetriebs entspricht. Bei dem Vorkonditionieren werden beispielsweise Parameter, die für den automatisierten Notlaufbetrieb benötigt werden, voreingestellt.

In einem Verfahrensschritt 11 wird die Zeit T_{S} bis zum Eintreten der zukünftigen Fahrsituation mit einer Summe aus der Zeit T_{U} zur Übernahme des Fahrzeugs durch den Fahrer und einer zusätzlichen Pufferzeit T_{P} verglichen, wenn zuvor festgestellt worden ist, dass das Fahrassistenzsystem 100 nicht in der Lage ist, das Fahrzeug 1000 in der zukünftig eintretenden Fahrsituation im automatisierten Fahrbetrieb zu steuern. Wenn bei diesem Vergleich von dem Fahrassistenzsystem 100 festgestellt worden ist, dass die Zeit T_{S} bis zum Eintreten der zukünftigen Fahrsituation größer als die Summe aus der Zeit T_{U} zur Übernahme des Fahrzeugs 1000 und der Pufferzeit T_{P} ist, wird der automatisierte Fahrbetrieb des Ausgangszustands 1 fortgesetzt. Wenn bei dem Vergleich hingegen festgestellt worden ist, dass die Zeit T_{S} bis zum Eintreten der zukünftigen Fahrsituation kleiner oder gleich der Summe aus der Zeit T_{U} zur Übernahme des Fahrzeugs und der Pufferzeit T_{P} ist, erfolgt in einem nachfolgenden Verfahrensschritt 12 mittels des Fahrassistenzsystems 100 ein Vergleich der Zeit T_{S} bis zum Eintreten der zukünftigen Fahrsituation mit der Zeit T_{U} zur Übernahme des Fahrzeugs.

Wenn bei diesem Vergleich der Zeit T_{S} mit der Zeit T_{U} im Verfahrensschritt 12 von dem Fahrassistenzsystem 100 festgestellt wird, dass die Zeit T_{S} bis zum Eintreten der zukünftigen Fahrsituation tatsächlich kleiner oder gleich der Zeit T_{U} zur Übernahme des Fahrzeugs 1000 durch den Fahrer ist, wird im Verfahrensschritt 13 der automatisierte Notlaufbetrieb des Fahrzeugs aktiviert. Das Fahrzeug kann nun bei der nächstmöglichen Gelegenheit, beispielsweise beim Erreichen einer Parkmöglichkeit, angehalten werden. Optional erfolgt während des Notlaufbetriebs weiterhin eine Interpretation der vorausliegenden Fahrsituation des Verfahrensschritts 6. Wenn dann im Verfahrensschritt 7 festgestellt wird, dass die vorausliegende Fahrsituation doch wieder automatisiert abgehandelt werden kann, wird wieder in den Ausgangszustand 1 des automatisierten Fahrens gewechselt.

Wenn bei dem Vergleich der Zeit T_{S} bis zum Eintreten der zukünftigen Fahrsituation mit der notwendigen Zeit T_{U} zur Übernahme des Fahrzeugs durch den Fahrer in dem Verfahrensschritt 12 festgestellt wird, dass die Zeit T_{S} größer als die Zeit T_{U} ist, wird in einem Verfahrensschritt 14 eine Fahrerübernahmeerkennung durchgeführt. Bei dieser Erkennung der Übernahme des Fahrzeugs durch den Fahrer werden die von den Sensoren 200 des Fahrzeugs 1000 erfassten manuellen Steuerungsvorgänge in der aktuellen Fahrsituation mit den von dem Fahrassistenzsystem 100 ermittelten automatisierten Steuerungsvorgängen für die aktuelle Fahrsituation verglichen.

Wenn dabei festgestellt wird, dass die manuellen Steuerungsvorgänge in der aktuellen Fahrsituation mit den von dem Fahrassistenzsystem 100 vorausberechneten automatisierten Steuerungsvorgängen in dieser aktuellen Fahrsituation übereinstimmen, wird das weitere Führen des Fahrzeugs mit dem Verfahrensschritt 5 fortgesetzt. Dabei wird der automatisierte Fahrbetrieb deaktiviert und das Fahrzeug im manuellen Fahrbetrieb gesteuert.

Wenn hingegen bei dem Vergleich des Verfahrensschritts 14 zwischen den manuellen Steuerungsvorgängen und den ermittelten automatisierten Steuerungsvorgängen für die aktuelle Fahrsituation von dem Fahrassistenzsystem festgestellt wird, dass die aus der automatisierten Fahrfunktion berechneten Sollwerte nicht mit den tatsächlichen manuellen Steuerungsvorgängen des Fahrers übereinstimmen, wird erneut in den Verfahrensschritt 6 gewechselt. Der Fahrer hat in diesem Fall das Fahrzeug noch nicht sicher übernommen. Daher wird das Fahrzeug zunächst automatisiert weitergesteuert.

Wenn im nachfolgenden Verfahrensschritt 7 festgestellt wird, dass die vorausliegende Fahrsituation nun doch automatisiert abgehandelt werden kann, wird die Vorkonditionierung des aktivierten Notlaufbetriebs, die zuvor in dem Verfahrensschritt 10 stattgefunden hat, im Verfahrensschritt 8 wieder gelöscht und das Fahrzeug automatisiert im Ausgangszustand 1 weiter betrieben.

## Patentansprüche

1. Verfahren zum Überwachen eines automatisierten Fahrens, umfassend:
- Bereitstellen eines Fahrzeugs (1000), wobei das Fahrzeug mittels eines Fahrassistenzsystems (100) durch automatisierte Steuerungsvorgänge in einem automatisierten Fahrbetrieb ohne einen Fahrer steuerbar ist, wobei das Fahrzeug (1000) mittels des Fahrassistenzsystems (100) in einem automatisierten Notlaufbetrieb, in dem der automatisierte Fahrbetrieb beendet und das Fahrzeug (1000) angehalten wird, steuerbar ist und wobei das Fahrzeug (1000) in einem manuellen Fahrbetrieb durch manuelle Steuerungsvorgänge des Fahrers steuerbar ist, wobei für einen Wechsel zwischen dem automatisierten Fahrbetrieb und dem manuellen Fahrbetrieb eine Zeit (T_{U}) zur Übernahme des Fahrzeugs (1000) durch den Fahrer erforderlich ist,
- Erfassen einer zukünftig eintretenden Fahrsituation,
- Feststellen, ob das Fahrassistenzsystem (100) in der Lage ist, in der zukünftigen Fahrsituation das Fahrzeug (1000) im automatisierten Fahrbetrieb zu steuern, **dadurch gekennzeichnet, dass** das Verfahren ferner umfasst:
- Vergleichen einer Zeit (T_{S}) bis zum Eintreten der zukünftigen Fahrsituation mit der Zeit (T_{U}) zur Übernahme des Fahrzeugs, wenn festgestellt worden ist, dass das Fahrassistenzsystem (100) nicht in der Lage ist, das Fahrzeug (1000) in der zukünftigen Fahrsituation im automatisierten Fahrbetrieb zu steuern,
- Überprüfen, ob die von Sensoren (200) des Fahrzeugs (1000) erfassten manuellen Steuerungsvorgänge in der aktuellen Fahrsituation mit den von dem Fahrassistenzsystem (100) ermittelten automatisierten Steuerungsvorgängen für die aktuelle Fahrsituation übereinstimmen, wenn festgestellt worden ist, dass die Zeit (T_{S}) bis zum Eintreten der zukünftigen Fahrsituation größer als die Zeit (T_{U}) zur Übernahme des Fahrzeugs (1000) ist,
- Deaktivieren des automatisierten Fahrbetriebs und Steuern des Fahrzeugs (1000) im manuellen Fahrbetrieb, wenn festgestellt worden ist, dass die manuellen Steuerungsvorgänge in der aktuellen Fahrsituation mit den von dem Fahrassistenzsystem (100) ermittelten automatisierten Steuerungsvorgängen für die aktuelle Fahrsituation übereinstimmen,
- Aktivieren des automatisierten Notlaufbetriebs des Fahrzeugs (1000), wenn festgestellt worden ist, dass die Zeit (T_{S}) bis zum Eintreten der zukünftigen Fahrsituation kleiner oder gleich der Zeit (T_{U}) zur Übernahme des Fahrzeugs (1000) ist.

2. Verfahren nach Anspruch 1, umfassend:
Fortsetzen des Verfahrens mit dem Schritt des Erfassens der zukünftig eintretenden Fahrsituation, wenn festgestellt worden ist, dass die manuellen Steuerungsvorgänge in der aktuellen Fahrsituation nicht mit den von dem Fahrassistenzsystem (100) ermittelten automatisierten Steuerungsvorgängen für die aktuelle Fahrsituation übereinstimmen.

3. Verfahren nach einem der Ansprüche 1 oder 2, umfassend:
- Vergleichen der Zeit (T_{S}) bis zum Eintreten der zukünftigen Fahrsituation mit einer Summe aus der Zeit (T_{U}) zur Übernahme des Fahrzeugs und einer Pufferzeit (T_{P}), wenn festgestellt worden ist, dass das Fahrassistenzsystem (100) nicht in der Lage ist, das Fahrzeug (1000) in der zukünftigen Fahrsituation im automatisierten Fahrbetrieb zu steuern,
- Fortsetzen des automatisierten Fahrbetriebs des Fahrzeugs (1000), wenn festgestellt worden ist, dass die Zeit (T_{S}) bis zum Eintreten der zukünftigen Fahrsituation größer als die Summe aus der Zeit (T_{U}) zur Übernahme des Fahrzeugs (1000) und der Pufferzeit (Tp) ist.

4. Verfahren nach Anspruch 3, umfassend:
Durchführen des Vergleichs der Zeit (T_{S}) bis zum Eintreten der zukünftigen Fahrsituation mit der Zeit (T_{U}) zur Übernahme des Fahrzeugs (1000), wenn festgestellt worden ist, dass die Zeit (T_{S}) bis zum Eintreten der zukünftigen Fahrsituation kleiner oder gleich der Summe aus der Zeit (T_{U}) zur Übernahme des Fahrzeugs (1000) und der Pufferzeit (T_{P}) ist.

5. Verfahren nach einem der Ansprüche 1 bis 4, umfassend:
- Überprüfen, ob der aktivierte Notlaufbetrieb des Fahrzeugs (1000) aktiviert ist, wenn festgestellt worden ist, dass das Fahrassistenzsystem (100) nicht in der Lage ist, das Fahrzeug (1000) in der zukünftigen Fahrsituation im automatisierten Fahrbetrieb zu steuern,
- Vorkonditionieren des aktivierten Notlaufbetriebs, wenn festgestellt worden ist, dass der aktivierte Notlaufbetrieb des Fahrzeugs (1000) deaktiviert ist und das Fahrassistenzsystem (100) nicht in der Lage ist, das Fahrzeug (1000) in der zukünftigen Fahrsituation im automatisierten Fahrbetrieb zu steuern.

6. Verfahren nach Anspruch 5, umfassend:
Löschen der Vorkonditionierung des aktivierten Notlaufbetriebs, wenn festgestellt worden ist, dass das Fahrassistenzsystem (100) in der Lage ist, das Fahrzeug (1000) in der zukünftigen Fahrsituation im automatisierten Fahrbetrieb zu steuern.

7. Verfahren nach einem der Ansprüche 1 bis 6, umfassend:
- Überprüfen, ob das Fahrassistenzsystem (100) derart defekt ist, dass der automatisierte Fahrbetrieb des Fahrzeugs (1000) mittels des Fahrassistenzsystems (100) unmöglich ist,
- Aktivieren des automatisierten Notlaufbetriebs des Fahrzeugs (1000), wenn festgestellt worden ist, dass das Fahrassistenzsystem (100) defekt ist.

8. Verfahren nach Anspruch 7, umfassend:
- Bereitstellen des Fahrzeugs (1000) mit einer Eingabeeinrichtung (300) zur externen Eingabe eines Steuerbefehls zum Wechsel in den manuellen Fahrbetrieb,
- Überprüfen, ob die Eingabe des Steuerbefehls zum Wechseln in den manuellen Fahrbetrieb erfolgt ist,
- Deaktivieren des automatisierten Notlaufbetriebs des Fahrzeugs (1000) und Steuern des Fahrzeugs (1000) im manuellen Fahrbetrieb, wenn das Fahrassistenzsystem (100) die Eingabe des Steuerbefehls zum Wechseln in den manuellen Fahrbetrieb festgestellt hat.

9. Fahrassistenzsystem zum automatisierten Fahren mit Überwachen des automatisierten Fahrens, wobei das Fahrassistenzsystem (100) zum Durchführen eines Verfahrens zum Überwachen eines automatisierten Fahrens nach einem der Ansprüche 1 bis 8 ausgebildet ist.

10. Fahrzeug zum automatisierten Fahren, umfassend:
ein Fahrassistenzsystem (100) zum automatisierten Fahren nach Anspruch 9.

## Claims

1. A method for monitoring automated driving, comprising:
- Providing a vehicle (1000), wherein the vehicle can be controlled by means of a driving assistance system (100) by automated control processes in an automated driving mode without a driver, wherein the vehicle (1000) can be controlled by means of the driving assistance system (100) in an automated emergency mode, in which the automated driving mode is terminated and the vehicle (1000) is stopped, and wherein the vehicle (1000) can be controlled in a manual driving mode by manual control processes of the driver, wherein a time (Tᵤ) is necessary for the driver to assume control of the vehicle (1000) for a change between the automated driving mode and the manual driving mode,
- Sensing a driving situation which will occur in the future,
- Establishing whether the driving assistance system (100) is able to control the vehicle (1000) in the automated driving mode in the future driving situation,
**characterized in that** the method further comprises:
- Comparing a time (Tₛ) up to the occurrence of the future driving situation with the time (Tᵤ) for the assumption of control of the vehicle, if it has been established that the driving assistance system (100) is not able to control the vehicle (1000) in the automated driving mode in the future driving situation,
- Checking whether the manual control processes sensed by sensors (200) of the vehicle (1000) correspond, in the current driving situation, to the automated control processes determined by the driving assistance system (100) for the current driving situation, if it has been established that the time (Tₛ) up to the occurrence of the future driving situation is longer than the time (Tᵤ) for the assumption of control of the vehicle (1000),
- Deactivating the automated driving mode and controlling the vehicle (1000) in the manual driving mode, if it has been established that the manual control processes correspond, in the current driving situation, to the automated control processes determined by the driving assistance system (100) for the current driving situation,
- Activating the automated emergency mode of the vehicle (1000), if it has been established that the time (Tₛ) up to the occurrence of the future driving situation is less than or equal to the time (Tᵤ) for the assumption of control of the vehicle (1000).

2. The method according to Claim 1, comprising:
Continuing the method with the step of sensing the driving situation which will occur in the future, if it has been established that the manual control processes do not correspond, in the current driving situation, to the automated control processes determined by the driving assistance system (100) for the current driving situation.

3. The method according to any one of Claims 1 or 2, comprising:
- Comparing the time (Tₛ) up to the occurrence of the future driving situation with a total made up of the time (Tᵤ) for the assumption of control of the vehicle and a buffer time (Tₚ), if it has been established that the driving assistance system (100) is not able to control the vehicle (1000) in the automated driving mode in the future driving situation,
- Continuing the automated driving mode of the vehicle (1000), if it has been established that the time (Tₛ) up to the occurrence of the future driving situation is longer than the total made up of the time (Tᵤ) for the assumption of control of the vehicle (1000) and the buffer time (Tₚ).

4. The method according to Claim 3, comprising:
Performing the comparison of the time (Tₛ) up to the occurrence of the future driving situation with the time (Tᵤ) for the assumption of control of the vehicle (1000), if it has been established that the time (Tₛ) up to the occurrence of the future driving situation is less than or equal to the total made up of the time (Tᵤ) for the assumption of control of the vehicle (1000) and the buffer time (Tₚ).

5. The method according to any one of Claims 1 to 4, comprising:
- Checking whether the activated emergency mode of the vehicle (1000) is activated, if it has been established that the driving assistance system (100) is not able to control the vehicle (1000) in the automated driving mode in the future driving situation,
- Preconditioning the activated emergency mode, if it has been established that the activated emergency mode of the vehicle (1000) is deactivated and the driving assistance system (100) is not able to control the vehicle (1000) in the automated driving mode in the future driving situation.

6. The method according to Claim 5, comprising:
Deleting the preconditioning of the activated emergency mode, if it has been established that the driving assistance system (100) is able to control the vehicle (1000) in the automated driving mode in the future driving situation.

7. The method according to any one of Claims 1 to 6, comprising:
- Checking whether the driving assistance system (100) is defective in such a manner that the automated driving mode of the vehicle (1000) by means of the driving assistance system (100) is impossible,
- Activating the automated emergency mode of the vehicle (1000), if it has been established that the driving assistance system (100) is defective.

8. The method according to Claim 7, comprising:
- Providing the vehicle (1000) with an input device (300) for externally inputting a control command to change to the manual driving mode,
- Checking whether the control command to change to the manual driving mode has been input,
- Deactivating the automated emergency mode of the vehicle (1000) and controlling the vehicle (1000) in the manual driving mode, if the driving assistance system (100) has established that the control command to change to the manual driving mode has been input.

9. A driving assistance system for automated driving with monitoring of the automated driving, wherein the driving assistance system (100) is configured to perform a method for monitoring automated driving according to any one of Claims 1 to 8.

10. A vehicle for automated driving, comprising:
a driving assistance system (100) for automated driving according to Claim 9.

## Revendications

1. Procédé pour la surveillance d'une conduite automatisée, comprenant :
- mise à disposition d'un véhicule (1000), le véhicule étant contrôlable dans un mode de conduite automatisé sans un conducteur au moyen d'un système d'assistance à la conduite (100) par des processus de commande automatisés, le véhicule (1000) étant contrôlable au moyen du système d'assistance à la conduite (100) dans un mode de fonctionnement d'urgence automatisé, dans lequel le mode de conduite automatisé est arrêté et le véhicule (1000) est stoppé, et le véhicule (1000) étant contrôlable dans un mode de conduite manuelle par des processus de commande manuels du conducteur, un temps (Tᵤ) étant nécessaire pour la reprise du véhicule (1000) par le conducteur pour un passage du mode de conduite automatisé au mode de conduite manuel,
- détection d'une situation de conduite apparaissant dans le futur,
- détermination du fait de savoir si le système d'assistance à la conduite (100) est en mesure de contrôler le véhicule (1000) dans le mode de conduite automatisé dans la situation de conduite future,
**caractérisé en ce que** le procédé comprend en outre :
- comparaison d'un temps (Tₛ) jusqu'à l'apparition de la situation de conduite future avec le temps (Tᵤ) pour la reprise du véhicule, lorsqu'il a été déterminé que le système d'assistance à la conduite (100) n'est pas en mesure de contrôler le véhicule (1000) dans la situation de conduite future en mode de conduite automatisé,
- surveiller si les processus de contrôle manuels détectés par des capteurs (200) du véhicule (1000) dans la situation de conduite actuelle correspondent aux processus de contrôle automatisés détectés par le système d'assistance à la conduite (100) pour la situation de conduite actuelle, lorsqu'il a été déterminé que le temps (Tₛ) jusqu'à l'apparition de la situation de conduite future est supérieur au temps (Tᵤ) pour la reprise du véhicule (1000),
- désactivation du mode de conduite automatisé et contrôle du véhicule (1000) en mode de conduite manuel, lorsqu'il a été déterminé que les processus de contrôle manuels dans la situation de conduite actuelle correspondent aux processus de contrôle automatisés détectés par le système d'assistance à la conduite (100) pour la situation de conduite actuelle,
- activation du mode de fonctionnement d'urgence automatisé du véhicule (1000), lorsqu'il a été déterminé que le temps (Tₛ) jusqu'à l'apparition de la situation de conduite future est inférieur ou égal au temps (Tᵤ) pour la reprise du véhicule (1000).

2. Procédé selon la revendication 1, comprenant :
poursuite du procédé avec l'étape de la détection de la situation de conduite apparaissant dans le futur lorsqu'il a été déterminé que les processus de contrôle manuels dans la situation de conduite actuelle ne correspondent pas aux processus de contrôle automatisés détectés par le système d'assistance à la conduite (100) pour la situation de conduite actuelle.

3. Procédé selon l'une des revendications 1 ou 2, comprenant :
- comparaison du temps (Tₛ) jusqu'à l'apparition de la situation de conduite future avec une somme du temps (Tᵤ) pour la reprise du véhicule et d'une marge de temps (Tₚ) lorsqu'il a été déterminé que le système d'assistance à la conduite (100) n'est pas en mesure de contrôler le véhicule (1000) dans la situation de conduite future en mode de conduite automatisé,
- poursuite du mode de conduite automatisé du véhicule (1000) lorsqu'il a été déterminé que le temps (Tₛ) jusqu'à l'apparition de la situation de conduite future est supérieur à la somme du temps (Tᵤ) pour la reprise du véhicule (1000) et de la marge de temps (Tₚ).

4. Procédé selon la revendication 3, comprenant :
Exécution de la comparaison entre le temps (Tₛ) jusqu'à l'apparition de la situation de conduite future et le temps (Tᵤ) pour la reprise du véhicule (1000), lorsqu'il a été déterminé que le temps (Tₛ) jusqu'à l'apparition de la situation de conduite future est inférieur ou égal à la somme du temps (Tᵤ) pour la reprise du véhicule (1000) et de la marge de temps (Tₚ).

5. Procédé selon l'une des revendications 1 à 4, comprenant :
- vérifier si le mode de fonctionnement d'urgence activé du véhicule (1000) est activé, lorsqu'il a été déterminé que le système d'assistance à la conduite (100) n'est pas en mesure de contrôler le véhicule (1000) dans la situation de conduite future en mode de conduite automatisé,
- préconditionnement du mode de fonctionnement d'urgence activé, lorsqu'il a été déterminé que le mode de fonctionnement d'urgence activé du véhicule (1000) est désactivé et que le système d'assistance à la conduite (100) n'est pas en mesure de contrôler le véhicule (1000) dans la situation de conduite future en mode de conduite automatisé.

6. Procédé selon la revendication 5, comprenant :
effacement du préconditionnement du mode de fonctionnement d'urgence activé, lorsqu'il a été déterminé que le système d'assistance à la conduite (100) est en mesure de contrôler le véhicule (1000) dans la situation de conduite future en mode de conduite automatisé.

7. Procédé selon l'une des revendications 1 à 6, comprenant :
- vérifier si le système d'assistance à la conduite (100) est défectueux de telle sorte que le mode de conduite automatisé du véhicule (1000) est impossible au moyen du système d'assistance à la conduite (100),
- activation du mode de fonctionnement d'urgence automatisé du véhicule (1000), lorsqu'il a été déterminé que le système d'assistance à la conduite (100) est défectueux.

8. Procédé selon la revendication 7, comprenant :
- mise à disposition du véhicule (1000) avec un dispositif d'entrée (300) pour l'entrée externe d'une commande pour le passage en mode de conduite manuelle,
- vérifier si l'entrée de la commande pour le passage en mode de conduite manuel a été effectuée,
- désactivation du mode de fonctionnement d'urgence automatisé du véhicule (1000) et contrôle du véhicule (1000) en mode de conduite manuel lorsque le système d'assistance à la conduite (100) a constaté l'entrée de la commande pour le passage en mode de conduite manuel.

9. Système d'assistance à la conduite pour la conduite automatisée avec surveillance de la conduite automatisée, le système d'assistance à la conduite (100) étant conçu pour l'exécution d'un procédé pour la surveillance d'une conduite automatisée selon l'une des revendications 1 à 8.

10. Véhicule pour la conduite automatisée, comprenant :
un système d'assistance à la conduite (100) pour la conduite automatisée selon la revendication 9.
